Europäisches Patentamt

European Patent Office

Office européen des brevets

(19)

(11) **EP 0 691 394 A1**

(12) **EUROPÄISCHE PATENTANMELDUNG**

(43) Veröffentlichungstag:
10.01.1996 Patentblatt 1996/02

(51) Int. Cl.6: **C10L 5/46**

(21) Anmeldenummer: 95110191.4

(22) Anmeldetag: 30.06.1995

(84) Benannte Vertragsstaaten:
**AT BE CH DE ES FR GB LI LU NL PT**

(30) Priorität: **08.07.1994 DE 4424111**

(71) Anmelder: **Gebr. OTTO KG**
**D-50968 Köln (DE)**

(72) Erfinder:
• **Mathews, Waldemar, Dr.**
**D-50127 Bergheim (DE)**
• **Reif, Clemens**
**D-35745 Herborn (DE)**

(74) Vertreter: **Fitzner, Uwe, Dr. et al**
**D-40852 Ratingen-Lintorf (DE)**

(54) **Material mit einem gegenüber Haushalts- und Gewerbeabfällen erhöhten Heizwert**

(57)     Die vorliegende Erfindung betrifft ein neuartiges Material mit einem gegenüber Haushalts- und Gewerbeabfällen erhöhten Heizwert, das durch Aufschmelzen von Stoffen aus dem Deponierückbau und/oder von Haushaltsmüll und/oder Gewerbeabfall und/oder Sortierresten aus der gesonderten Sammlung von Abfällen erhältlich ist, aus dem inerte und kompostierbare Substanzen weitgehend entfernt sind und das zum Einsatz im Hochofen zur Verfügung steht.

**Fig. 1**

EP 0 691 394 A1

**Beschreibung**

Die vorliegende Erfindung betrifft ein neuartiges Material mit einem gegenüber Haushalts- und Gewerbeabfällen erhöhten Heizwert.

Nach der Novelle des Abfallgesetzes der Bundesrepublik Deutschland von 1986, die im Oktober 1996 in Kraft tritt, ist Haus- und Gewerbeabfall getrennt zu erfassen. Das bedeutet, daß der Abfall in folgende Fraktionen aufzuteilen ist:

1. Papier und Pappe
2. Glas
3. Leichtverpackungen
4. Bio-Abfall
5. Restabfall

Da bereits die Fraktionen Papier, Pappe, Glas und Leichtverpackungen weitgehend flächendeckend getrennt entsorgt werden, verbleibt die Aufgabe, Bio- und Restabfälle getrennt zu erfassen. Ist dies einmal geschehen, können die Bio-Abfälle in bestehenden oder neu zu errichtenden Anlagen in Kompost umgewandelt werden.

Es erhebt sich die Frage, was mit den Restabfällen getan werden kann. Im Grunde unterscheiden sich die Probleme der Restabfallbeseitigung nicht von denen, die vor der getrennten Sammlung bestimmter Fraktionen bestanden hatten. Denn bei den Restabfällen handelt es sich um Mischfraktionen, die die verschiedensten Materialien in unbekannter Zusammensetzung enthalten.

Zur Zeit werden die thermische Abfallbehandlung und die kalte biologische Vorbehandlung diskutiert. Nach der „Technischen Anleitung Siedlungsabfall" erfüllen jedoch lediglich die thermischen Verwertungsverfahren mit Schlackenverglasung die Anforderungen. Die Reststoffe der kalten biologischen Vorbehandlung müßten ebenfalls verbrannt werden.

Nach den Feststellungen des Umweltbundesamtes in Berlin werden in der Bundesrepublik Deutschland im Jahre 1994 etwa 45 Millionen Tonnen Haus- und Gewerbeabfälle gesammelt werden. Man rechnet mit einer jährlichen Steigerungsrate von etwa 1 - 2 %. Die Zusammensetzung und Mengen sind aus Tabelle 1 ersichtlich.

Tab. 1

| Haus und Gewerbeabfall | | |
|---|---|---|
| in 1994 | | 45,0 Mio. t/Jahr |
| - Hausmüll | | 27,0 Mio. t/Jahr |
| - Gewerbemüll | | 18,0 Mio. t/Jahr |
| Bio- Abfall | 29,9 % | 13,5 Mio. t/Jahr |
| Papier/Pappe | 16,0 % | 7,2 Mio. t/Jahr |
| Metalle | 3,2 % | 1,5 Mio. t/Jahr |
| Glas | 9,2 % | 4,0 Mio. t/Jahr |
| Kunststoffe | 5,4 % | 2,4 Mio. t/Jahr |
| Rest | 36,3 % | 16,4 Mio. t/Jahr |
| | 100,0 % | 45,0 Mio. t/Jahr |

Hier sind Aufteilungen wiedergegeben, wie sie sich aus der Analyse der letzten Abfallrecherche von 1987 darstellen, wobei Zusammenfassungen vorgenommen wurden.

Bei der getrennten Sammlung werden sich aber andere Anteile ergeben. Die Zusammensetzung und Mengen sind in Tabelle 2 abgeschätzt.

Tab. 2

| Haus und Gewerbeabfall, Zusammensetzung und Mengen bei getrennter Sammlung | | |
| --- | --- | --- |
| | Menge 1994 | 45,0 Mio. t |
| Bio- Abfall | 22,2 % | 10,0 Mio. t/Jahr |
| Papier/Pappe | 13,3 % | 6,0 Mio. t/Jahr |
| Leichtfraktion | 2,2 % | 1,6 Mio. t/Jahr |
| Glas | 13,3 % | 6,0 Mio. t/Jahr |
| Restabfall | 47,6 % | 21,4 Mio. t/Jahr |

Aus dieser Tabelle ergibt sich, daß mit einer Restabfallmenge von 21,4 Mio. Tonnen pro Jahr zu rechnen ist. Es ist aber äußerst schwierig, die Zusammensetzung dieser Restabfälle vorherzusagen. Trotzdem wird versucht, auf der Basis vorhandener Analysen und Hochrechnungen die Zusammensetzung abzuschätzen. Eine solche Schätzung ist in der folgenden Tabelle daher wiedergegeben.

Tab. 3

| Restabfall, Abschätzung der Zusammensetzung | | |
| --- | --- | --- |
| | Menge 1994 | 21,4 Mio. t |
| Biogener Abfall | 30,0 % | 6,4 Mio. t/Jahr |
| Papier/Pappe | 10,0 % | 2,1 Mio. t/Jahr |
| Metalle | 2,0 % | 0,4 Mio. t/Jahr |
| Glas | 4,0 % | 0,8 Mio. t/Jahr |
| Steine/Keramik | 20,0 % | 4,2 Mio. t/Jahr |
| Kunststoffe | 10,0 % | 2,1 Mio. t/Jahr |
| Textilien | 15,0 % | 3,2 Mio. t/Jahr |
| Holz | 9,0 % | 2,2 Mio t/Jahr |
| | 100,0 % | 21,4 Mio. t/Jahr |

Durch Aufbereitung der Restabfälle in der Weise, daß eine biogene und mehrere inerte sowie eine heizwertreiche Fraktion entstehen, könnten sich Zusammensetzung und Mengenströme nach der folgenden Tabelle 4 ergeben.

Tab. 4

| Restabfall, nach Aufbereitung | | |
| --- | --- | --- |
| Fraktionen | Menge 1994 | 21,4 Mio. t |
| Bio- Abfall | 30,0 % | 6,4 Mio. t/Jahr |
| Metalle | 2,0 % | 0,4 Mio. t/Jahr |
| Glas, Steine, Keramik | 24,0 % | 5,2 Mio. t/Jahr |
| Hochkaloriger Rest | 44,0 % | 9,4 Mio. t/Jahr |
| | 100,0 % | 21,4 Mio. t/Jahr |

Hieraus ist ersichtlich, daß die Aufbereitung dieses Restabfalls und dessen Verwertung mit Schwierigkeiten verbunden ist, weil trotz vorheriger getrennter Sammlung sich immer noch eine Mischfraktion mit schwer abschätzbaren Einzelbestandteilen ergibt. Einzige Möglichkeit zur Verwertung ist nach heutigem Stand die bereits erwähnte thermische Behandlung bzw. die Verbrennung. Eine Wiederverwertung des Restabfalls ist nach derzeitigem Stand der Technik nicht möglich. Die Probleme des nicht fraktionierten Hausmülls früherer Jahre und des Restabfalls gleichen sich daher. Im Grunde ist die Problematik der Müllverwertung nur von der Gesamtabfallmenge auf die anfallende Fraktion des Restabfalls verschoben worden. Es steht daher zu erwarten, daß infolge der Deponierung des Restabfalls in absehbarer Zeit dieselben Probleme auftreten, die vor der Getrennterfassung des Haus- und Gewerbeabfalls bestanden.

Nachteil der bisher üblichen Verbrennung des Abfalls ist, daß dieser einen extrem niedrigen Heizwert hat, nämlich von etwa 8.000 kJ/kg. Aus diesem Grunde ist die Abfallverbrennung nicht von ausreichender Wirtschaftlichkeit. Insbesondere für die Energiegewinnung ist der Heizwert nicht ausreichend, setzt man Schlacken-, Asche- und Staubverglasung voraus. Schon gar nicht läßt sich der Restabfall im Rahmen anderer thermischer Verfahren anstelle von herkömmlichen Energieträgern, z.B. Kohle und Schweröl, einsetzen. Die vorliegende Entwicklung hat sich nunmehr die Aufgabe gestellt, ein Material mit einem gegenüber den Haushalts- und Gewerbeabfällen erhöhten Heizwert zur Verfügung zu stellen.

Diese Aufgabe wird dadurch gelöst, daß ein Material durch Aufschmelzen von Stoffen aus dem Deponierückbau und/oder von Haushaltsabfall und/oder Gewerbeabfall und/oder Sortierresten aus der geordneten Abfallsammlung erhältlich ist, aus dem inerte und kompostierbare Substanzen weitgehend entfernt sind.

Das Aufschmelzen wird vorzugsweise in einem Extruder bei 150 - 250° C durchgeführt. Dieser ist zur Unterstützung des Schmelzprozesses mit einer Zusatzheizung ausgerüstet, die mittels Dampf eine Temperatur von etwa 200° Celsius erzeugt.

Bevor das Material in den Extruder gegeben wird, erfolgt eine möglichst weitgehende Befreiung von inerten und biogenen Substanzen.

Hierzu werden vorzugsweise zunächst Steine und Sand entfernt. Dies kann mittels herkömmlicher Siebungsverfahren erfolgen. Besonders wirtschaftlich ist das Arbeiten mit sog. Siebtrommeln.

Es ist empfehlenswert, anschließend Glas und Metalle zu entfernen. Das Auslesen kann per Hand durchgeführt werden. Es können aber auch Windsichter, Magnetseparatoren oder Wirbelstromtrennanlagen eingesetzt werden.

In einer Variante des erfindungsgemäßen Verfahrens wird sodann der derartig von inerten Materialien befreite Restabfall in eine sog. Extrusionspresse gegeben. Es handelt sich hierbei um eine Vorrichtung, die im wesentlichen aus einem Zylinder besteht. In den Zylinder wird der Abfall gegeben. Von oben und unten werden in den Zylinder zwei Kolben geführt, die eine Schließkraft von 500 - 5.000 Tonnen, vorzugsweise etwa 1.000 Tonnen zu erzeugen vermögen. Hierdurch wird der Abfall zusammengepreßt. Der biogene Anteil im Abfall wird durch Bohrungen im Mantel des Zylinders nach außen gedrückt.

Der biogene Anteil kann anschließend zu einer Kompostierungsvorrichtung verbracht werden. Er wird dann in einer Nachrotte ausgereift und steht nach einer Verweildauer von etwa zwei bis vier Wochen zur landwirtschaftlichen Nutzung, zur Deponieabdeckung oder zur Rekultivierung von Salzhalden zur Verfügung.

Der in der Extrusionspresse anfallende Preßkuchen wird einer Mühle zugeführt und dort auf die gewünschte Korngröße zerkleinert. Vorzugsweise beträgt die Kantenlänge der erhaltenen Teile etwa 10 mm.

Im Anschluß erfolgt eine nochmalige Abscheidung von Metallen. Dies kann z.B. mittels Magneten durchgeführt werden. Ebenso sind auch Siebungsverfahren denkbar, bei denen das unterschiedliche Gewicht der Metalle und des übrigen Restabfalls ausgenutzt wird.

Alternativ zu der Abtrennung des biogenen Anteils in der Extrusionspresse kann dieser bereits in der Siebtrommel abgesiebt werden. Diese Siebtrommeln sind mit 20-100 mm, vorzugsweise 40 mm Lochungen versehen. Der biogene Anteil des Restabfalls ist mit 60-80 % Reinheit im Siebdurchgang zu finden.

Der biogene Anteil wird dann per Förderband zu einer Tunnelkompostierungsanlage transportiert und mittels aerober Kompostierung in Wochenfrist in Kompost verwandelt. Dieser Kompost wird in einer Nachrotte ausgereift und steht dann nach einer Verweildauer von zwei bis vier Wochen nach einer Absiebung auf 10-15 mm zur landwirtschaftlichen Nutzung, zur Deponieabdeckung oder zur Rekultivierung von Salzhalden, etc. zur Verfügung.

Alternativ zur Kompostierung läßt sich die Biofraktion auch unter anaeroben Bedingungen behandeln. Vorzugsweise werden Methan bildende Bakterien verwendet, z.B. Methanobacterium formicum, Methanobacterium suboxydans, Methanobacterium omelianskii, Methanobacterium söhngenii, Methanosarcina barkeri, Methanosarcina methanica. Bei dieser Variante des Verfahrens wird die Biofraktion in einen Hydrolyse Reaktor gegeben und mit Prozeßwasser auf einen Trockensubstanzgehalt von 10-15 % eingestellt. Nach dem Hydrolysereaktor werden schwere Feststoffe wie Sand, Steine und Erden mittels Hydrozyklon abgeschieden und der Rest in einem Methanreaktor unter anaeroben Bedingungen vergoren. Der Reaktor produziert pro Tonne Bioabfall etwa 50 m³ Biogas mit einem Methananteil von ca. 70 %. Dieses Biogas kann verstromt werden. Leichtere Bestandteile wie Kunststofffolien können am Kopf des Reaktors abgezogen und entwässert werden. Sie werden der übrigen Kunststofffraktion zugefügt. Der überwiegende Teil des Prozeßwassers wird im Kreislauf geführt. Ein Teil muß zur Salzentfrachtung über eine Kläranlage entsorgt werden.

Nach der Abtrennung des Bioanteils wird das zerkleinerte Material in drei Windsichtern folgendermaßen aufgetrennt:

Windsichter I: Glas, Steine, Sand, Metalle, Hygienepapiere, und Holz. Die Metalle werden über Wirbelstromsichter in Fe und Ne Metalle getrennt. Die Schwerfraktion muß separat aufgearbeitet werden.

Windsichter II: Kunststoffe, Verbunde und Restmetalle. Es erfolgt wieder eine Wirbelstrom-Sichtung.

Windsichter III: Papier/Pappe und Kunststoffolien.

Die Fraktionen Kunststoff, Verbunde und die Folienfraktion werden vereinigt und mit Shreddern auf 30 mm zerkleinert.

Das den Shredder - bzw. in der ersten Verfahrensvarianten die Mühle hinter der Extrusionspresse - verlassende Restmaterial wird sodann dem Extruder zugeführt. Aus dem Extruder wird ein Strang abgezogen, der am Ausgang mit Messern zerteilt wird. Der Strang hat einen Durchmesser von 10 - 500 mm, vorzugsweise von etwa 50 mm. Die Messer sind so ausgelegt, daß Scheiben von 10 - 100 mm, vorzugsweise von etwa 10 - 20 mm Kantenlänge entstehen. Diese Scheiben werden anschließend auf ein Kühlband zwecks Verfestigung gegeben.

Nach dem Abkühlen gelangen die Scheiben in eine Mühle, in der ein Vermahlen auf die gewünschte Korngröße stattfindet. Bevorzugt werden erfindungsgemäß 5 - 8 mm.

Das so erhaltene Material weist einen gegenüber herkömmlichem Hausmüll überraschend erhöhten Heizwert auf. Dieser liegt bei 20.000 - 40.000 kJ/kg, vorzugsweise bei etwa 30.000 kJ/kg. Aus diesem Grunde eignet sich das Material insbesondere für den Einsatz im Hochofenprozeß, wo es Koks oder Schweröl zu ersetzen vermag. Im folgenden wird die Erfindung unter Bezugnahme auf die Figuren näher beschrieben. Dabei werden für die Mengenströme beispielhafte Zahlenwerte genannt.

Figur 1 zeigt das Verfahrensschema in der Gesamtübersicht.
Figur 2 zeigt die Extrusionspresse.
Figur 3 stellt schematisch einen Hochofen dar.
Figur 4 zeigt die Materialschichtung im Hochofen.
Figur 5 bildet den Einsatz der erfindungsgemäßen Granulate im Hochofen ab.
Figur 6 zeigt eine Verfahrensvariante ohne Extrusionspresse mit Vergärung.
Figur 7 zeigt eine Verfahrensvariante ohne Extrusionspresse mit Tunnelkomposter.

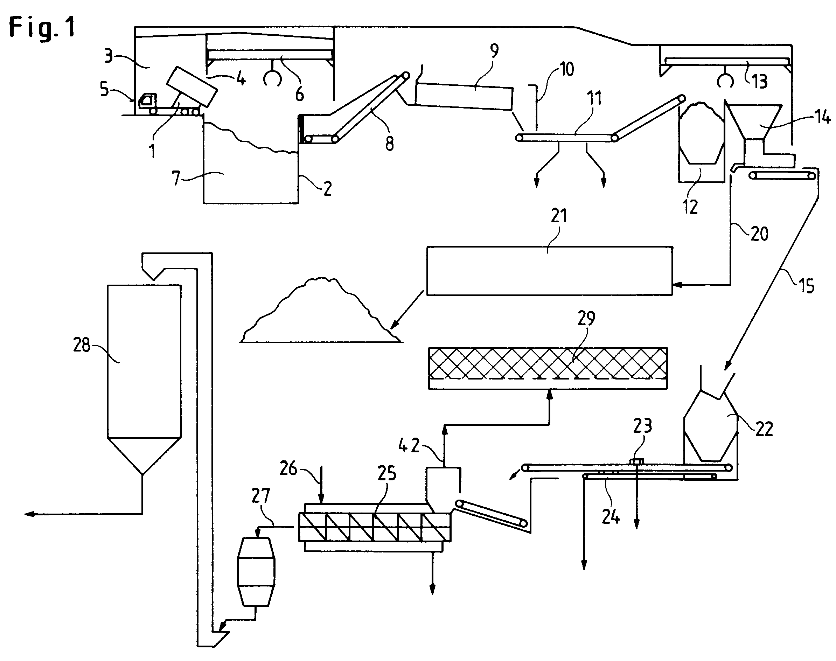

In den Figuren 1, 5 und 6 ist das gesamte Verfahren auf Basis einer Kapazität von 100.000 t/Jahr schematisch dargestellt. Der Restabfall wird mit dem Müllfahrzeug 1 in den Abfallbunker 2 transportiert. Dieser Bunker ist ein geschlossenes Gebäude, das über Rolltore von der Außenwelt abgeschottet ist. Die Anlieferung ist in verschiedene Boxen unterteilt und arbeitet nach dem Schleusensystem, d.h. das Müllfahrzeug fährt in die Schleuse 3 und kann seinen Inhalt entleeren. Daraufhin schließt wieder das Tor 4 und das Fronttor 5 öffnet sich. Das Müllfahrzeug 1 kann die Anlage verlassen. Der Müllbunker 2 wird ständig auf Unterdruck gehalten. Die dort entstehenden Abluftströme werden über einen Biofilter 29 entsorgt (typische Abluftmenge: 20.000 m³/h).

In dem Abfallbunker 2 selbst sind zwei Kräne 6 installiert, die per Greifer den Restabfall zu zwei Shreddern transportieren. Diese Shredder dienen der Grobzerkleinerung des Restabfalls 7. Sie zerkleinern das Material auf eine Kantenlänge von etwa 100-200 mm. Ein hinter dem Shredder angeordneter Magnet scheidet ca. 0.2 t/h FE-Metalle ab. Der Austrag der Shredder wird mit einer typischen Rate von ca. 17 t/h über die Förderbänder 8 abgezogen, die wiederum zwei Siebtrommeln 9 beschicken. In den Siebtrommeln 9 werden Steine und Sand abgesiebt.

In Figur 1 führt der Überlauf 10 der Siebtrommeln 9 auf die Lesebänder 11. Hier werden von Hand Glas und Metalle ausgelesen. Die verbleibenden Materialien werden zu zwei offenen Silos 12 geleitet. Aus diesen Silos 12 werden mittels der Krananlage 13 zwei Extrusionspressen 14 beschickt. Diese Extrusionspressen 14 werden chargenweise versorgt.

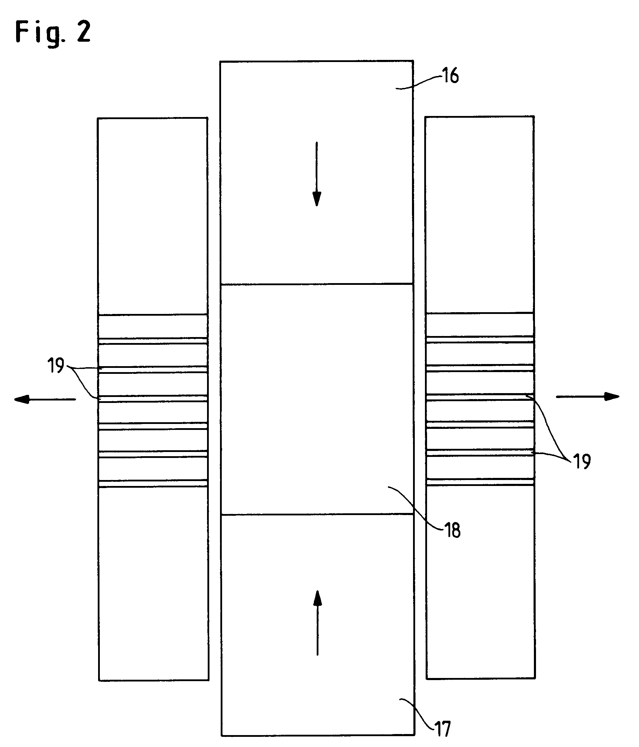

Die Extrusionspressen bestehen aus je einem Zylinder 18, der an seinem oberen und unteren Ende mit den Kolben 16 und 17 versehen ist (Figur 2). In den Zylinder 18 wird der Abfall gegeben. Die Kolben fahren von oben und unten in den Zylinder ein und verdichten das Material mit einer Schließkraft von etwa 1.000 Tonnen.

In dem Mantel des Zylinders sind die Bohrungen 19 vorgesehen. Diese haben einen Durchmesser von etwa 10 mm. Durch diese Bohrungen 19 wird das biogene Material nach außen gedrückt.

In der Anlage nach Figur 1 wird der biogene Anteil dann über das Förderband 20 zu dem Tunnelkompostierer 21 transportiert und mittels aerober Kompostierung innerhalb etwa einer Woche in Kompost verwandelt. Dieser Kompost wird in einer Nachrotte ausgereift und steht dann nach einer Verweildauer von zwei bis vier Wochen zur landwirtschaftlichen Nutzung, zur Deponieabdeckung oder zur Rekultivierung von Salzhalden zur Verfügung.

Der Preßkuchen aus der Extrusionspresse 14 wird der Mühle 22 zugeführt. Hier wird er auf eine Kantenlänge von etwa 10 mm zerkleinert. Danach erfolgt mittels der Magneten 23 und 24 eine Abscheidung der Metallbestandteile. Das so befreite Material wird dem Extruder 25 zugeführt.

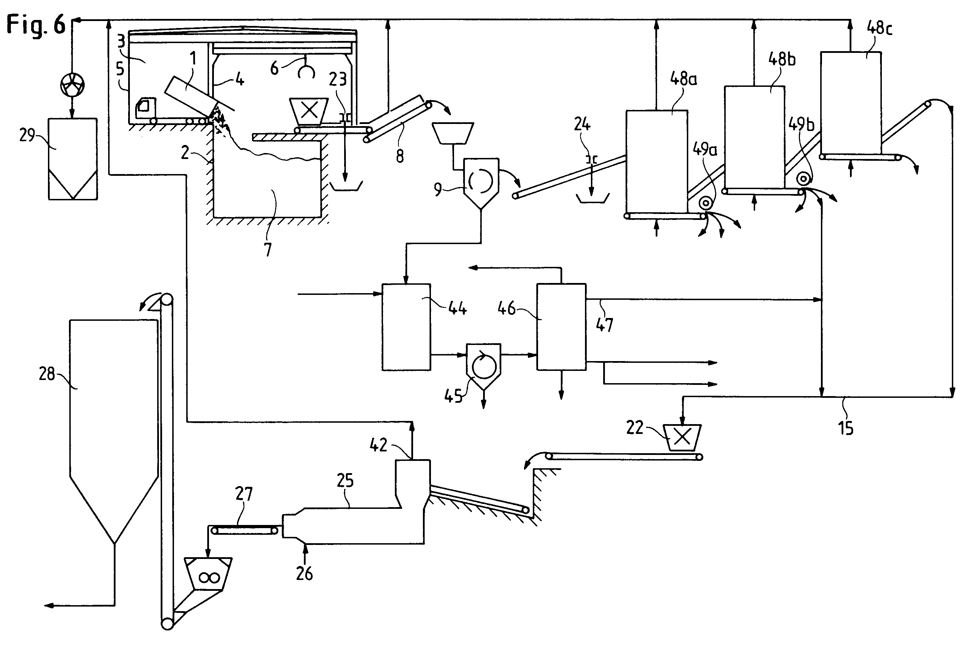

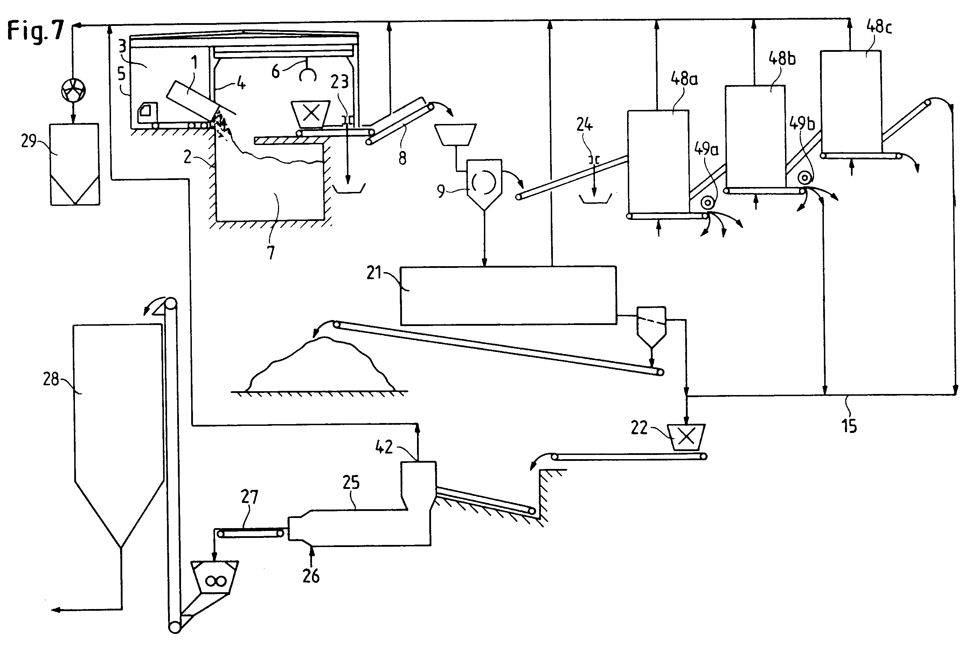

Das in Figur 6 und 7 dargestellte Verfahren weicht in der Abtrennung des biogenen Anteils vom oben beschriebenen Verfahren ab. Das dem Trommelsieb 9 zugeführte Rohmaterial wird nämlich in eine Biofraktion (ca. 4.8 t/h) und ein Siebgut (ca. 12.2 t/h) aufgetrennt. Erfindungsgemäß hat die Siebtrommel 9 hierbei Lochungen mit einem Durchmesser von 40 mm. Der biogene Anteil des Restabfalls ist mit 60-80 % Reinheit im Siebdurchgang zu finden.

In Figur 6 wird die Biofraktion zunächst in einen Hydrolyse Reaktor 44 gegeben und mit Prozeßwasser auf einen Trockensubstanzgehalt von 10-15 % eingestellt. Nach dem Hydrolysereaktor 44 werden schwere Feststoffe wie Sand, Steine und Erden mittels Hydrozyklon 45 abgeschieden und der Rest in einem Methanreaktor 46 unter anaeroben Bedingungen vergoren. Der Reaktor produziert pro Tonne Bioabfall etwa 50 m$^3$ Biogas mit einem Methananteil von ca. 70 %. Dieses Biogas kann verstromt werden. Leichtere Bestandteile wie Kunststofffolien können am Kopf 47 des Reaktors abgezogen und entwässert werden. Sie werden der übrigen Kunststofffraktion zugefügt. Der überwiegende Teil des Prozeßwassers wird im Kreislauf geführt. Ein Teil muß zur Salzentfrachtung über eine Kläranlage entsorgt werden.

Im Verfahren gemäß Figur 7 wird der biogene Anteil dann per Förderband zu einer Tunnelkompostierungsanlage 21 transportiert und mittels aerober Kompostierung in Wochenfrist in Kompost verwandelt. Dieser Kompost wird in einer Nachrotte ausgereift und steht dann nach einer Verweildauer von zwei bis vier Wochen nach einer Absiebung auf 10-15 mm zur landwirtschaftlichen Nutzung, zur Deponieabdeckung oder zur Rekultivierung von Salzhalden, etc. zur Verfügung.

Nach der Abtrennung des Bioanteils in den Verfahren nach Figur 6 und 7 wird das zerkleinerte Material in drei Windsichtern 48a-c folgendermaßen aufgetrennt:

Windsichter 48a: Glas, Steine, Sand (zusammen ca. 1.7 t/h), Hygienepapiere (ca. 1.2 t/h), Holz (1.5 t/h) und Metalle. Die Metalle werden über Wirbelstromsichter 49a in Fe (ca. 0.1 t/h) und Ne (ca. 0.3 t/h) Metalle getrennt. Die Schwerfraktion muß separat aufgearbeitet werden.

Windsichter 48b: Kunststoffe, Verbunde (zusammen ca. 2.8 t/h) und Restmetalle (ca. 0.4 t/h wie oben). Es erfolgt wieder eine Wirbelstrom-Sichtung 49b.

Windsichter 48c: Papier/Pappe (ca. 2.8 t/h) und Kunststoffolien (ca. 1.0 t/h).

Die Fraktionen Kunststoff, Verbunde und die Folienfraktion werden vereinigt und mit zwei Shredderlinien 22 auf 30 mm zerkleinert.

Für das Aufschmelzen des den Shredder 22 (Figur 6 und 7) bzw. die Mühle 22 (Figur 1) verlassende Material wird erfindungsgemäß ein fremdbeheizter Doppelwellenextruder 25 eingesetzt. Hierbei wird durch die Friktionswärme das Material aufgeschmolzen. Es handelt sich bei den aufschmelzbaren Bestandteilen vor allen Dingen um Kunststoffe. Durch die Zusatzheizung 26 wird der Schmelzprozeß unterstützt. Hierbei wird etwa mit einer Temperatur von 200° Celsius gearbeitet. Alle Materialien, wie Papier, Pappe, Textilien, Holz usw. werden bei diesem Prozeß in die Kunststoff-Matrix eingebunden.

Aus dem Extruder 25 wird ein Strang von etwa 50 mm Durchmesser abgezogen und am Ausgang mit Messern zerteilt. Hierdurch entstehen Scheiben von ca. 10 - 20 mm Kantenlänge. Diese Scheiben werden auf dem Kühlband 27 verfestigt und zu einer Mühle transportiert.

Die Mühle mahlt das Material auf eine Korngröße von etwa 5 - 8 mm auf. Danach wird das Material pneumatisch zu den Vorratssilos 28 befördert.

Der Extruder ist mit den Entgasungsöffnungen 42 versehen. Die Gase werden abgezogen und zu dem Bio-Filter 29 geleitet. Dort werden sie von Geruchsstoffen befreit und über einen Kamin in die Atmosphäre entlassen.

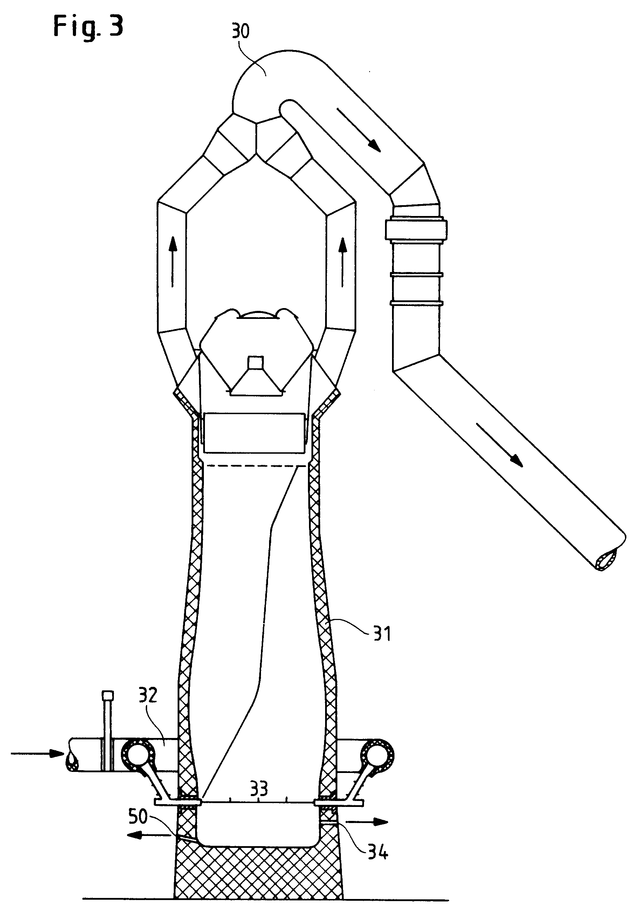

Das Material aus dem Silo 28 kann nunmehr dem Einsatz in einem Hochofenprozeß zugeführt werden. Im folgenden soll der Einsatz der heizwertreichen Fraktion im Hochofenprozeß beschrieben werden. In Abbildung 3 ist der Hochofen schematisch dargestellt. Am Kopf 30 des Hochofens wird die Möllerung, bestehend aus Eisenerz, Koks und Zuschlagstoffen (z. Kalk) über ein Doppelschleusensystem eingetragen. Der nach unten sich erweiternde Hochofen ist mit einer Mischung aus den oben genannten Stoffen gefüllt. Durch diesen Teil des Hochofens, den Schacht, rutscht die Möllerung nach unten. Der untere Teil 31 des Hochofens, die Rast, verjüngt sich konisch. Über die Ringleitung 32 wird in diesen Teil etwa 1.000° heiße Luft mittels am Umfang verteilter Düsen 33 eingeblasen. In der Blasebene herrschen Temperaturen von mehr 2.000°.

Es erfolgt eine Teilverbrennung des Kokses. Die Reaktionsprodukte der Verbrennung, nämlich Kohlendioxyd und Wasser, lagern sich aufgrund der herrschenden chemischen Gleichgewichte in Kohlenmonoxid und Wasserstoff um. Dieses Reduktionsgas reduziert das Eisenerz zu Roheisen. Bei den herrschenden Temperaturen von mehr als 2.000° Celsius schmelzen Roheisen sowie Gangart auf und bilden am unten Ende des Ofens den Roheisensumpf und die darüber schwimmende Schlacke. Über die Schlackenabstichöffnungen 34 wird die Schlacke und über den Roheisenabstich 43 das Roheisen abgestochen.

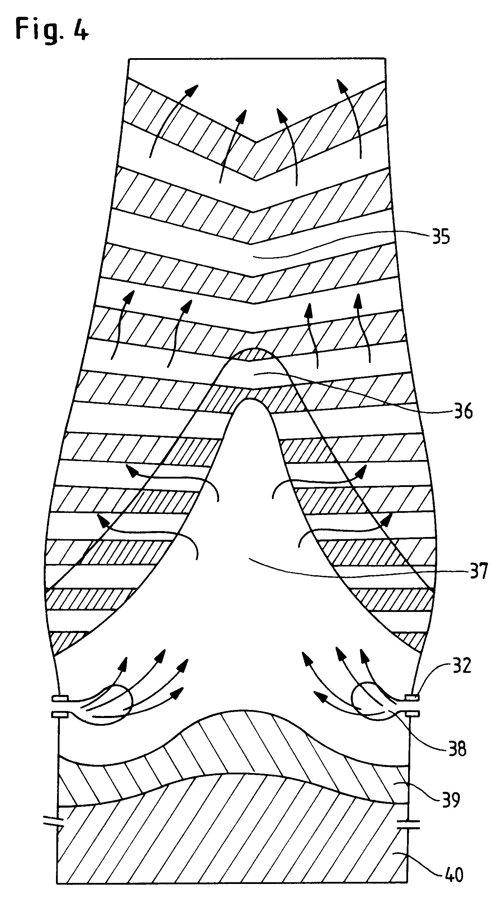

In Figur 4 ist die Materialschichtung noch einmal im Detail dargestellt. Deutlich zu erkennen sind die Schachtzone 35, die kohäsive Zone 36, die aktive Kokszone 37, die Wirbelzone 38 mit der Heißwindzufuhr 32 sowie die Schlackeschicht 39 und die Roheisenschicht 40.

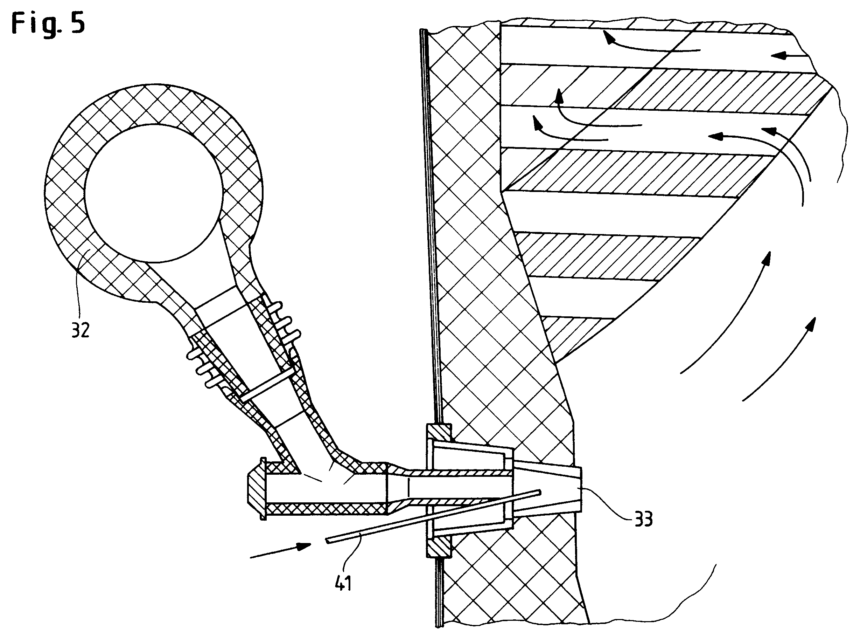

In Figur 5 ist schließlich detailliert aufgezeigt, wie die erfindungsgemäßen Materialien aus der Restabfallaufbereitung in den Hochofen eingetragen werden. Dies geschieht durch die Lanze 41 in den Blasdüsen 33.

Die vorzugsweise kunststoffreiche und hochkalorige Fraktion wird mittels der Lanze 41, die in die Blasdüse 33 hineinragt, in die heißeste Zone, die Wirbelzone 38 des Hochofens eingetragen. Dort erfolgt bei ca. 2.100° Celsius eine Spontanvergasung und Teilverbrennung der Stoffe. Wie bereits oben erwähnt, lagern sich dann die Reaktionsprodukte zu einem Gasgemisch aus Kohlenmonoxid und Wasserstoff um. Dieses Gemisch sorgt wiederum für die Reduktion der Erze zu Roheisen.

Pro Tonne Roheisen werden zur Zeit etwa 400 kg Koks eingesetzt. Da der Kokseinsatz sehr teuer ist, hat man in den letzten Jahren zunehmend einen Teil durch Schweröl substituiert. Dieser Schwerölzusatz beträgt ca. 100 kg pro Tonne Roheisen. Erfindungsgemäß kann nunmehr das Schweröl durch die aus dem Restabfall hergestellten Materialien ersetzt werden.

Bei Einsatz von kunststoffhaltigen Materialien oder ähnlichen Stoffen gilt derzeit eine Begrenzung bezüglich des Chlorgehaltes von etwa 0,5 %. Versuche haben jedoch gezeigt, daß diese umweltrelevanten Werte (z.B. Dioxin) unterhalb der gesetzlichen Normen liegen, so daß damit zu rechnen ist, daß der Chlorgehalt auf etwa 2 % heraufgesetzt wird.

Das erfindungsgemäße Verfahren zeigt eine überraschende Optimierung der Trennung in biogene, inerte und hochkalorige Fraktionen. Die inerten und biogenen Fraktionen werden nunmehr nicht einem thermischen Prozeß zugeführt, sondern einer Wiederverwertung. Das anfallende Restmaterial bietet die Möglichkeit einer rohstofflichen Verwertung anstelle der Verbrennung. Dabei erfolgt die ökologische Optimierung aller Emissionen, d.h. es wird ein abwasserfreier Verfahrensweg angeboten. Außerdem wird die Reinigung etwaiger anfallender gasförmiger Emissionen über Biofilter durchgeführt. Hinzu kommt, daß die Verarbeitungskosten in einem wirtschaftlich verwertbaren Bereich liegen. Mit der beschriebenen Technik lassen sich darüber hinaus nicht nur Restabfälle aus Haus- und Gewerbeabfall, sondern auch Sortierreste aus dem dualen System sowie Rest aus Deponierückbaumaßnahmen verwerten. Insbesondere eignet sich das Verfahren überall dort, wo Deponiekapazitäten knapp werden bzw. keine Deponieräume mehr vorhanden sind.

**Bezeichnerliste:**

| | |
|---|---|
| 1 | Müllfahrzeug |
| 2 | Abfallbunker |
| 3 | Schleuse |
| 4 | Tor |
| 5 | Fronttor |
| 6 | Kräne |
| 7 | Restabfall |
| 8 | Förderbänder |
| 9 | Siebtrommel |
| 10 | Überlauf |
| 11 | Lesebänder |
| 12 | Silos |
| 13 | Krananlage |
| 14 | Extrusionspresse |
| 16,17 | Kolben |
| 18 | Zylinder |
| 19 | Bohrungen |
| 20 | Förderband |
| 21 | Tunnelkompostierer |
| 22 | Mühle |
| 23,24 | Magneten |
| 25 | Extruder |
| 26 | Zusatzheizung |
| 27 | Kühlband |
| 28 | Vorratssilos |
| 29 | Biofilter |
| 30 | Kopf des Hochofens |
| 31 | Rast des Hochofens |
| 32 | Ringleitung |
| 33 | Düsen |
| 34 | Schlackenabstichöffnungen |
| 35 | Schachtzone |
| 36 | kohäsive Zone |
| 37 | aktive Kokszone |

| 38 | Wirbelzone |
|---|---|
| 39 | Schlackeschicht |
| 40 | Roheisenschicht |
| 41 | Lanze |
| 42 | Entgasungsöffnungen |
| 43 | Roheisenabstich |
| 44 | Hydrolyse-Reaktor |
| 45 | Hydrozyklon |
| 46 | Methan-Reaktor |
| 47 | Kunststoffolien |
| 48a-c | Windsichter |
| 49a,b | Wirbelstrom-Scheider |

**Patentansprüche**

1. Material mit einem gegenüber Haushalts- und Gewerbeabfällen erhöhten Heizwert, erhältlich durch Aufschmelzen von Stoffen aus dem Deponierückbau und/oder von Haushaltsabfall und/oder Gewerbeabfall und/oder Sortierresten aus der gesonderten Sammlung von Abfällen, aus dem inerte und kompostierbare Substanzen weitgehend entfernt sind.

2. Material gem. Anspruch 1,
erhältlich durch Aufschmelzen in einem Extruder (25), vorzugsweise durch Aufschmelzen bei etwa 150 - 250° C.

3. Material gem. einem der Ansprüche 1 - 2,
erhältlich durch Aussieben der inerten Substanzen, d.h. vorzugsweise von Sand, Steinen, Glas und Metallen.

4. Material gem. einem der Ansprüche 1 - 3,
erhältlich durch Auspressen und/oder Aussieben der kompostierbaren Bestandteile.

5. Material gem. einem der Ansprüche 1 - 4,
**dadurch gekennzeichnet**, daß der Heizwert bei etwa 15.000 und 40.000 kJ/kg liegt.

6. Verfahren zur Herstellung eines Materials mit einem gegenüber Haushalts- und Gewerbeabfällen erhöhten Heizwert,
**dadurch gekennzeichnet,** daß Stoffe aus dem Deponierückbau und/oder Haushaltsabfälle und/oder Gewerbeabfall und/oder Sortierreste aus der gesonderten Sammlung von Abfällen nach der Entfernung von inerten und kompostierbaren Substanzen aufgeschmolzen werden.

7. Verfahren nach Anspruch 6,
**dadurch gekennzeichnet,** daß das Aufschmelzen in einem Extruder (25) vorzugsweise bei etwa 150 - 250° C durchgeführt wird.

8. Verfahren nach einem der Ansprüche 6 - 7,
**dadurch gekennzeichnet,** daß die inerten Substanzen, vorzugsweise Sand und Steine, durch Aussieben entfernt werden, vorzugsweise in einer Siebtrommel (9) und/oder in hintereinandergeschalteten Windsichtern (48a-c), ggf. mit nachgeschalteten Wirbelstromabscheidem (49a,b).

9. Verfahren nach einem der Ansprüche 6 - 8,
**dadurch gekennzeichnet,** daß die kompostierbaren Bestandteile unter Druck, vorzugsweise mit einer Kolbenschließkraft von etwa 500 - 5.000 Tonnen, ausgepreßt werden, wobei für das Auspressen vorzugsweise eine Extrusionspresse (14) bestehend aus einem Zylinder (18) und zwei Kolben (16,17) zum Einsatz kommt.

10. Verfahren nach Anspruch 9,
**dadurch gekennzeichnet,** daß der Presskuchen in einem Shredder oder in einer Mühle (22) auf etwa 10 mm granuliert wird.

11. Verfahren nach einem der Ansprüche 6 bis 10,
**dadurch gekennzeichnet,** daß die kompostierbaren Bestandteile in einer Siebtrommel (9), die vorzugsweise Material mit einer Größe von über 20-100 mm, insbesondere über 40 mm, zurückhält, ausgesiebt werden, so daß sie im Siebdurchgang mit einer Reinheit von über 50%, vorzugsweise 60-80%, vorliegen.

12. Verfahren nach einem der Ansprüche 6 bis 11,
**dadurch gekennzeichnet,** daß die biogenen Bestandteile nach Abtrennung kompostiert werden, vorzugsweise in einer Tunnelkompostierungsanlage mit anschließender Aussiebung und Nachrotte.

13. Verfahren nach einem der Ansprüche 6 bis 12,
**dadurch gekennzeichnet,** daß die biogenen Bestandteile fermentiert werden, vorzugsweise unter anaeroben Bedingungen, insbesondere indem

a) in einem Hydrolysereaktor (44) mit Prozeßwasserzugabe ein Trockensubstanz-Gehalt von 10-15% eingestellt,
b) in einem Hydrozyklon (45) schwere Feststoffe wie Sand, Steine, Erden abgetrennt, und
c) in einem Reaktor (46) zu Methan umgesetzt wird.

14. Verfahren nach Anspruch 13,
**dadurch gekennzeichnet,** daß das in der Siebtrommel (9) zurückgehaltene Grobgut ggf. in einem oder mehreren hintereinandergeschalteten Windsichtern weiter aufgetrennt und anschließend in einer Mühle oder in einem Shredder (22) auf vorzugsweise unter 30 mm zerkleinert wird.

15. Verfahren nach Anspruch 10 oder 14,
**dadurch gekennzeichnet,** daß das die Mühle bzw. den Shredder (22) verlassende Material anschließend in einem Extruder (25) extrudiert wird.

16. Verfahren nach Anspruch 15,
**dadurch gekennzeichnet,** daß ein Extrudat in Form eines Stranges mit einem Durchmesser von 10 - 500 mm anfällt, der vorzugsweise auf eine Kantenlänge von 10 - 100 mm geschnitten und/oder anschließend auf eine Korngröße von 5 mm gemahlen wird.

17. Verwendung des Materials nach einem der Ansprüche 1 - 5 für Hochöfen als Ersatz für Koks oder Schweröl.

Fig. 1

## Fig. 2

# Fig. 3

Fig. 4

Fig. 5

Fig. 6

Fig.7

EP 0 691 394 A1

Europäisches
Patentamt

EUROPÄISCHER RECHERCHENBERICHT

Nummer der Anmeldung

EP 95 11 0191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | WO-A-93 09207 (MONTEL)<br>* Ansprüche; Abbildungen * | 1-16 | C10L5/46 |
| Y | EP-A-0 359 250 (VEZZANI)<br>* Ansprüche; Abbildungen * | 1-16 | |
| A | EP-A-0 189 327 (SIMON-BARRON)<br>* Ansprüche; Abbildungen * | 1-16 | |
| A | US-A-3 790 091 (LAW ET AL.) | 1-16 | |
| A | US-A-3 858 504 (BOYER) | 1-16 | |
| A | PATENT ABSTRACTS OF JAPAN<br>vol. 9 no. 88 (C-276) ,17.April 1985<br>& JP-A-59 217796 (KATSUMI TAKAO)<br>7.Dezember 1984,<br>* Zusammenfassung * | | |

RECHERCHIERTE SACHGEBIETE (Int.Cl.6)

C10L

Der vorliegende Recherchenbericht wurde für alle Patentansprüche erstellt

| Recherchenort | Abschlußdatum der Recherche | Prüfer |
|---|---|---|
| DEN HAAG | 19.Oktober 1995 | Meertens, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

17